# EUROPEAN PATENT APPLICATION

(11) **EP 4 265 773 A1**
(43) Date of publication of application: **25.10.2023**
(21) Application number: 21911463.4
(22) Date of filing: 21.12.2021
(51) Int. Cl.: C22C 38/04, C22C 38/38, C22C 38/22

(54) **HIGH-MANGANESE AUSTENITIC STEEL FOR DISC BRAKE**

(30) Priority: 21.12.2020 KR 20200179498; 20.12.2021 KR 20210183090
(71) Applicant: POSCO Co., Ltd, Pohang-si, Gyeongsangbuk-do 37859 (KR)
(72) Inventor: LEE, Dongho, Gwangyang-si, Jeollanam-do 57807 (KR); LEE, Soongi, Gwangyang-si, Jeollanam-do 57807 (KR)
(74) Representative: Meissner Bolte Partnerschaft mbB
(86) International application number: PCT/KR2021/019470
(87) International publication number: WO 2022/139396

(57) **Abstract**

Disclosed is: an austenitic high manganese steel for disc brake, which exhibits an excellent friction coefficient. In accordance with an embodiment of the present invention, the steel contains, in percent by weight (wt%), 0.2 to 1.8% of carbon (C), 8 to 30% of manganese (Mn), and the remainder of iron (Fe) and inevitable impurities, the microstructure comprises 90% or more of austenite by area fraction, and the length of austenitic grain boundaries may be 1 µm or more per unit area of 100 µm².

## Description

### [Technical Field]

The present invention relates to an austenitic high manganese steel for disc brake, and more particularly, to an austenitic high manganese steel for excellent friction coefficient.

### [Background Art]

To address the increasingly severe issue of global warming, regulations on carbon dioxide emissions are being strengthened. Particularly in the automotive industry, fuel efficiency regulations are being tightened, leading to attempts to reduce vehicle weight to improve fuel efficiency.

Accordingly, attempts to reduce vehicle body weight have been attempted in various aspects, for example, any component tries to reduce the thickness within the limit of maintaining the same performance. Also, disc brakes need to reduce the thickness within a range that does not affect the safety of the vehicle body, such as braking performance.

The disc brake is an automotive member that performs a braking action by friction with a brake pad. However, due to repetitive friction, the thickness of the disc brake can decrease, necessitating the need for wear resistance to ensure that there is no problem in braking within a sufficient service life. Additionally, considering the characteristics of the disc brake, the surface in contact with the brake pad can be exposed to frictional heat, and that surface can be locally heated to a high temperature, which can cause a reduction in strength. In the other words, insufficient friction coefficients can therefore result in a critical safety issue with the reduction of the thickness of disc brakes.

(Prior Art 1) Korean Patent Application Publication No. 10-2008-0058440 (Published on June 25, 2008)

### [Disclosure]

### [Technical Problem]

To solve the foregoing problems, provided is austenitic high manganese steel for disc brakes having an excellent friction coefficient.

However, the problem that the present invention aims to solve is not limited to the above-mentioned problems, and other problems not mentioned will be clearly understood by those skilled in the art from the description below.

### [Technical Solution]

As an embodiment of the present invention for achieving the above-described objectives, austenitic high manganese steel comprises, in percent by weight (wt%), 0.2 to 1.8% of carbon (C), 8 to 30% of manganese (Mn), and the remainder of iron (Fe) and inevitable impurities, and the microstructure comprises 90% or more of austenite by area fraction, and a length of austenitic grain boundaries may be 1 µm or more per unit area of 100 µm ².

Also, in accordance with an embodiment of the present invention, the austenitic high manganese steel may further comprise at least one of Cr, Mo, and W.

Also, in accordance with an embodiment of the present invention, the content of Cr, Mo, and W of the austenitic high manganese steel may be 8% or less in total.

Also, in accordance with an embodiment of the present invention, an area fraction of precipitate at austenite grain boundaries may be 5% or more.

Also, in accordance with an embodiment of the present invention, austenite grain length may be 30 to 120 µm per unit area of 100 µm².

Also, in accordance with an embodiment of the present invention, the friction coefficient of austenitic manganese steel may be 0.4 or more.

### [Advantageous Effects]

According to the present invention, an austenitic high manganese steel for disc brake having an excellent friction coefficient may be provided by controlling the length of austenitic grain boundaries per unit area.

### [Best Mode]

An austenitic high manganese steel comprising, in percent by weight(wt%), 0.2 to 1.8% of carbon (C), 8 to 30% of manganese (Mn), and the remainder of iron (Fe) and inevitable impurities, the microstructure comprises 90% or more of austenite by area fraction, and the length of austenitic grain boundaries may be 1 µm or more per unit area of 100 µm².

### [Modes of the Invention]

Hereinafter, embodiments of the present disclosure will be described in detail with reference to the accompanying drawings. The embodiments of the present disclosure may, however, be embodied in many different forms and should not be construed as being limited to the embodiments set forth herein. Rather, these embodiments are provided so that this disclosure will be thorough and complete, and will fully convey the concept of the invention to those skilled in the art.

Also, the terms used herein are merely used to describe particular embodiments. An expression used in the singular encompasses the expression of the plural, unless otherwise indicated. Throughout the specification, the terms such as "including" or "having" are intended to indicate the existence of features, operations, functions, components, or combinations thereof disclosed in the specification, and are not intended to preclude the possibility that one or more other features, operations, functions, components, or combinations thereof may exist or may be added.

Meanwhile, unless otherwise defined, all terms used herein have the same meaning as commonly understood by one of ordinary skill in the art to which this disclosure belongs. Thus, these terms should not be interpreted in an idealized or overly formal sense unless expressly so defined herein. As used herein, the singular forms are intended to include the plural forms as well, unless the context clearly indicates otherwise.

The terms "about", "substantially", etc. used throughout the specification mean that when a natural manufacturing and a substance allowable error are suggested, such an allowable error corresponds to the value or is similar to the value, and such values are intended for the sake of clear understanding of the present invention or to prevent an unconscious infringer from illegally using the disclosure of the present invention.

The inventors of this invention have studied steel materials used for parts requiring high temperature strength, such as disc brake, and they confirmed that austenitic steel has high strength at high temperatures and making it a suitable material for disc brake. Steel with a microstructure of commonly observed pearlite, ferrite, or high-strength martensite experience reduced braking performance due to thermally induced phase transformations on the surface of the disc caused by repetitive braking. Conversely, steel with an austenitic microstructure does not undergo phase transformations at high temperatures, allowing it to maintain high strength at both room temperature and high temperatures. However, at high temperatures where the disc brake is heated, relying solely on austenitic steel as the main microstructure may not be sufficient to maintain its performance at high temperatures. So, it is necessary to form precipitates within the steel in an appropriate shape and distribution. Conventional austenitic steels normally limit the amount of precipitates present in the grain boundaries to suppress a decrease in ductility and impact toughness. On the other hand, the present invention enhances the high temperature wear resistance of the steel by promoting the formation of precipitates at the grain boundaries in order to prevent the formation of precipitates at grain boundaries as well as the interconnection between precipitates.

That is, the steel of the present invention is austenitic steel in which a large amount of precipitates are formed at grain boundaries. Meanwhile, the microstructure of austenitic steel according to the present invention includes austenite and precipitates. Specifically, the microstructure may comprise austenite as the main constituent with a percentage area fraction of austenite of 90% or more, preferably 99% or more. The microstructure also contains precipitates with a percentage area fraction of 5% or more, and may additionally include α'-martensite and ε-martensite as impurities that may unavoidably form during the manufacturing process.

In addition, the high manganese steel according to the present invention is based on an austenite structure and has the advantage of having excellent work hardenability as well as wear resistance. Therefore, in the present invention, it can be considered that the austenite steel grade is formed when the austenite area fraction is secured to be 90% or more.

In accordance with an embodiment of the present invention, a length of austenitic grain boundaries may be 1 µm or more, preferably 30 µm or more per unit area of 100 µm². The more grain boundaries, which are sites where precipitates (carbides) can form, the easier precipitation can occur in the carbide formation temperature range. To achieve a high friction coefficient of austenitic high manganese steel, the length of austenitic grain boundaries may be 1 µm or more, preferably 30 µm or more per unit area of 100 µm². As the grain size decreases and their number increases, the length of the grain boundaries per unit area increases, making it preferable to have a larger length of grain boundaries per unit area. However, in consideration of the practical limits of the manufacturing process, the upper limit of the austenite grain boundary length may be 120 µm per unit area of 100 µm², in accordance with an embodiment of the present invention.

In accordance with an embodiment of the present invention, the higher the friction coefficient of austenitic high manganese steel, the better. For example, the friction coefficient may be 0.4 to 0.7, preferably 0.5 to 0.8. Austenitic steel can be applied to disc brakes only when the coefficient of friction satisfies 0.4 or higher. Specifically, a low friction coefficient can lead to longer braking distances, while a too high friction coefficient can cause stress overload and excessive wear of the brake pads in other components due to sudden braking.

In accordance with an embodiment of the present invention, an austenitic high manganese steel may comprise, in percent by weight (wt%), 0.2 to 1.8% of carbon (C), 8 to 30% of manganese (Mn), and the remainder of iron (Fe) and inevitable impurities.

Hereinafter, reasons for numerical limitations on the contents of alloy elements in the embodiment of the present disclosure will be described. Hereinafter, the unit is wt% unless otherwise stated.

The content of C is from 0.2 to 1.8%, preferably 0.3 to 1.5%.

C is an element added to obtain the strength of products and stabilizes austenite, allowing for the formation of an austenitic microstructure at room temperature. In particular, C is dissolved in austenite to increase work hardening, or to secure high wear resistance by precipitating at grain boundaries, or to secure non-magnetic as an austenite phase stabilizing element.

In conventional austenitic high manganese products that use C, grain boundary carbide precipitation due to the addition of excessive C decreases the toughness of the material and causes embrittlement of the steel, so the content of C is limited to suppress carbide precipitation. However, the present invention utilizes grain boundary carbides to improve high-temperature strength and wear resistance. Specifically, in the present invention, C is used to form grain boundary carbides. The temperature range in which carbides exist in a stable state within the grain boundary is approximately 400 to 900 °C, which coincides with the temperature range for products that require high-temperature strength and wear resistance such as disc brakes. In this temperature range, carbides present in grain boundaries have the effect of significantly improving the performance of products such as disc brakes by increasing the high-temperature strength and wear resistance of the material.

Considering the above-mentioned effect, in the present invention, the content of C is 0.2% or more in percent by weight (wt%). However, if the C content is excessive, carbides in the steel material may be precipitated in an excessive amount, leading to a decrease in productivity. Therefore, in the present invention, the upper limit of the C content may be limited to 1.8%.

The content of Mn is from 8 to 30%, preferably 10 to 25%.

Mn is an element that stabilizes austenite, and Mn may be added in a content of 8% or more to obtain the austenite phase as the main microstructure. However, excessive Mn content may cause issues such as decreased hardenability, manufacturing process difficulties, increased manufacturing costs, reduced tensile strength, and decreased hardening during processing. Therefore, in the present invention, the upper limit of the Mn content may be limited to 30%.

In addition, the high manganese steel according to the present invention may further comprise at least one of Cr, Mo, and W, and the content of Cr, Mo, and W may be 8% or less in total. Cr, Mo, and W improve corrosion resistance and are solid solution-strengthening effect elements.

Specifically, Cr, Mo, and W are elements that form carbides, and the formed carbides are precipitated in the grain boundaries, increasing high-temperature strength. However, excessive contents of Cr, Mo, and W may increase manufacturing costs, and there is also a risk of forming ferrite, which prevents obtaining an austenite phase as the main microstructure.

The remaining component of the composition of the present disclosure is Fe. However, the composition may include unintended impurities inevitably incorporated from raw materials or surrounding environments, and thus the addition of other alloying elements is not excluded. The impurities are not specifically mentioned in the present disclosure, as they are known to any person skilled in the art of manufacturing.

However, it is preferable that Ni is not included in the austenitic high manganese steel for a disc brake according to the present invention. Ni is a very expensive metal, so it is not suitable for use in consumables such as brakes. Therefore, the austenitic high-manganese steel for disc brakes according to the present invention has the advantage of providing low-cost brake materials without Ni content, while achieving a high friction coefficient.

Hereinafter, a method for manufacturing austenitic high manganese steel according to the present invention will be described in detail. According to the present invention, manufacturing conditions may be appropriately controlled so as to satisfy the above-described alloy composition and microstructure, and are not particularly limited. In accordance with an embodiment of the present invention, the austenitic high manganese steel can be manufactured by, reheating a slab, rough rolling, and finishing rolling followed by hot rolling, then cooling, heat treatment to precipitate carbides at the austenite grain boundary, for example, heat treatment at about 400 to 900 ° C, but is not limited thereto. For example, when applying the high-manganese steel according to the present invention to a disc brake, carbides may also be formed during the operation of the brake without any separate heat treatment, as the brake can be heated to a temperature range of around 400 to 900°C, where carbides can be precipitated.

Hereinafter, the present disclosure will be described in more detail through examples. However, it is necessary to note that the following examples are only intended to illustrate the present disclosure in more detail and are not intended to limit the scope of the present disclosure. This is because the scope of the present disclosure is determined by matters described in the claims and able to be reasonably inferred therefrom.

### Examples

Table 1 shows the alloy composition of the steel of Examples and Comparative Examples of the present invention. All other components except for the alloying elements shown in Table 1 are the remainder of Fe.

**Table 1**

| | Alloy element (wt%) | | | |
|---|---|---|---|---|
| | C | Mn | Cr | Ni |
| Example 1 | 1.13 | 13.1 | - | - |
| Example 2 | 1.2 | 20.1 | 2.6 | - |
| Example 3 | 0.38 | 23.7 | 3.3 | - |
| Example 4 | 0.83 | 21.3 | - | - |
| Comparative Example 1 | 3.75 | 0.12 | - | - |
| Comparative Example 2 | 0.07 | 1.5 | 25 | 20 |

Table 2 shows the fraction of austenite area at room temperature, length of austenitic grain boundaries per unit area, friction coefficient, and weight loss of the examples and comparative examples prepared above were measured.

Specifically, the length of austenitic grain boundaries was measured as the length (µm) of austenitic grain boundaries per unit area of 100 µm².

The friction coefficient was measured by testing for 24 hours at a temperature of 450°C through a pin-on-disk test.

The weight loss is to confirm high temperature strength and wear resistance and was measured by comparing specimens before and after the friction coefficient test.

**Table 2**

| | Fraction of austenite area at room temperature (%) | Length of austenitic grain boundaries per unit area (µm) | Friction coefficient | Weight loss (g) |
|---|---|---|---|---|
| Example 1 | 99 | 32 | 0.53 | 0.38 |
| Example 2 | 99 | 36 | 0.61 | 0.13 |
| Example 3 | 99 | 45 | 0.58 | 0.12 |
| Example 4 | 99 | 41 | 0.51 | 0.36 |
| Comparative Example 1 | - | immeasurable | 0.30 | 5.7 |
| Comparative Example 2 | 100 | 21 | immeasurable | immeasurable |

According to Tables 1 and 2, in the case of Examples 1 to 4, which satisfy the alloy composition of the present invention, the length of austenitic grain boundaries per unit area is 32 µm or more, indicating a relatively high formation of austenitic grain boundaries that make it easy for carbide precipitation to occur at high temperatures. Accordingly, it was confirmed that the coefficient of friction was higher than 0.5 at 450°C. The weight loss was also found to be 0.38 g or less, indicating excellent high-temperature strength and wear resistance.

In the case of Comparative Example 1, which is a steel material widely used as a conventional brake material, an austenite microstructure was not formed, a ferrite and pearlite structure was formed, and the friction coefficient at 450 ° C was as low as 0.3. In addition, it was confirmed that the weight loss of Comparative Example 1 was 5.7g, indicating poor high-temperature strength and wear resistance compared to the examples. That is, Examples according to the present invention showed superior performance compared to Comparative Example 1 corresponding to the conventional brake steel, indicating that the inventive material can be more economical and superior by reducing the production thickness, etc.

In the case of Comparative Example 2, the C and Mn contents were too low, and material deformation occurred, so the friction coefficient and the weight loss were immeasurable.

While the present disclosure has been particularly described with reference to exemplary embodiments, it should be understood by those skilled in the art that various changes in form and details may be made without departing from the spirit and scope of the present disclosure.

## Claims

1. An austenitic high manganese steel comprising, in percent by weight (wt%), 0.2 to 1.8% of carbon (C), 8 to 30% of manganese (Mn), and the remainder of iron (Fe) and inevitable impurities, and
wherein a microstructure comprises 90% or more of austenite by area fraction,
wherein a length of austenitic grain boundaries is 1 µm or more per unit area of 100 µm ².

2. The austenitic high manganese steel of claim 1, further comprising at least one of Cr, Mo, and W.

3. The austenitic high manganese steel of claim 2, wherein the content of Cr, Mo, and W is 8% or less in total.

4. The austenitic high manganese steel of claim 1, wherein an area fraction of precipitate at austenite grain boundaries is 5% or more.

5. The austenitic high manganese steel of claim 1, wherein austenite grain length is 30 to 120 µm per unit area of 100 µm ².

6. The austenitic high manganese steel of claim 1, wherein the friction coefficient of austenitic high manganese steel is 0.4 or more.
